# EUROPÄISCHE PATENTANMELDUNG

(11) **EP 4 847 221 A1**
(43) Veröffentlichungstag der Anmeldung: **02.12.2026**
(21) Anmeldenummer: 26180407.4
(22) Anmeldetag: 21.05.2026
(51) Int. Cl.: B27M 1/08, B23Q 7/04, B27C 5/00, B27C 5/06

(54) **BEARBEITUNGSMASCHINE FÜR WERKSTÜCKE AUS HOLZ, HOLZÄHNLICHEN WERKSTOFFEN, AUS KUNSTSTOFF UND DGL. SOWIE VERFAHREN ZUR BEARBEITUNG SOLCHER WERKSTÜCKE**

(30) Priorität: 26.05.2025 DE 102025001834
(71) Anmelder: Michael Weinig AG, 97941 Tauberbischofsheim (DE)
(72) Erfinder: EGERTER, Rolf, 74722 Buchen (DE); GÖTZ, Daniel, 74731 Walldürn-Altheim (DE); HERBST, Laurin, 97980 Bad Mergentheim (DE)
(74) Vertreter: Patentanwälte Jackisch-Kohl und Kohl

(57) **Zusammenfassung**

Die Bearbeitungsmaschine hat eine Laufbahn (2), längs der auf einander gegenüberliegenden Seiten Spanneinheiten (3, 4) angeordnet sind. Von ihnen ist mindestens eine in x-Richtung verfahrbar. Die Spanneinheiten (3, 4) weisen jeweils Klemmbacken (32, 42) zum Einspannen der Werkstücke (1) auf, die mit wenigstens einem Werkzeug (14) bearbeitet werden. Zumindest die eine Spanneinheit (4) weist einen Stützteil (56) mit in y-Richtung vorstehenden Vorsprung (57) auf. Zumindest die Oberseite des Vorsprunges (57) bildet die Auflage (36) für die Werkstücke (1). Sie werden an beiden Längsseiten mit wenigstens zwei, in Längsrichtung der Werkstücke (1) gesehen, sich gegenüberliegenden Spanneinheiten (3, 4) eingespannt und mit einem Auftrennwerkzeug (14) in zwei Werkstückteile aufgetrennt, die nach dem Auftrennen (einzeln) in jeweils mindestens einer Spanneinheit (3, 4) eingespannt sind.

## Beschreibung

Die Erfindung betrifft eine Bearbeitungsmaschine für Werkstücke aus Holz, holzähnlichen Werkstoffen, aus Kunststoff und dgl. nach dem Oberbegriff des Anspruches 1 sowie ein Verfahren zur Bearbeitung solcher Werkstücke nach dem Oberbegriff des Anspruches 5.

Es sind Bearbeitungsmaschinen bekannt, die längs einer Laufbahn verfahrbare Spanneinheiten haben, in denen Werkstücke eingespannt werden, um diese an Bearbeitungswerkzeugen vorbeizufahren.

Es ist auch bekannt, an einem Werkstück eine Glasleiste abzutrennen. Diese wird nach dem Abtrennen beispielsweise in einen Glasleistenbehälter abgeworfen. Falls die Glasleiste weiterbearbeitet werden muss, ist dies nur aufwändig in einem weiteren Bearbeitungsvorgang möglich. Außerdem gibt es keine Zuordnung des Fensterkantels zu der Glasleiste, die aus einem Werkstück hergestellt wurden.

Der Erfindung liegt die Aufgabe zugrunde, die gattungsgemäße Bearbeitungsmaschine und das gattungsgemäße Verfahren so auszubilden, dass
eine optimale Bearbeitung der Werkstücke möglich ist.

Diese Aufgabe wird bei der gattungsgemäßen Bearbeitungsmaschine erfindungsgemäß mit den kennzeichnenden Merkmalen des Anspruches 1 und beim gattungsgemäßen Verfahren erfindungsgemäß mit den kennzeichnenden Merkmalen des Anspruches 5 gelöst.

Die zumindest eine Spanneinheit der erfindungsgemäßen Bearbeitungsmaschine hat den Stützteil mit dem in y-Richtung vorstehenden Vorsprung. Zumindest die Oberseite des Vorsprunges bildet die Auflage für die Werkstücke. Aufgrund des in y-Richtung vorstehenden Vorsprunges ist es möglich, Werkstücke einzuspannen, die an ihrer der Spanneinheit zugewandten Seite mit Vertiefungen oder Nuten versehen sind. Der vorstehende Vorsprung kann in die Nut eingreifen und die die Nut nach oben begrenzende Innenseite darauf aufliegen. Dann ist es möglich, das Werkstück von oben mit den Klemmbacken gegen den Vorsprung zu belasten.

Vorteilhaft ist es, wenn der den Vorsprung aufweisende Stützteil eine geneigte Vorderseite aufweist. Dies ermöglicht es, die Spanneinheit so an das einzuspannende Werkstück in y-Richtung heranzufahren, dass der Vorsprung in die Nut eingreifen kann, ohne dass eine Kontaktierung mit der Vorderseite des Stützteiles zu befürchten ist.

Ein optimaler Eingriff des Vorsprunges in die Nut ergibt sich, wenn die Vorderseite des Stützteiles stumpfwinklig an die Unterseite des Vorsprunges anschließt. Der Winkel zwischen der Vorderseite und der Unterseite kann
so gewählt werden, dass der Vorsprung zur sicheren Abstützung entsprechend weit in die Nut eingreifen kann.

Vorteilhaft ist es, wenn die Unterseite des Vorsprunges parallel zur Auflage verläuft.

Beim erfindungsgemäßen Verfahren werden die Werkstücke an beiden Längsseiten mit wenigstens zwei, in Längsrichtung der Werkstücke gesehen, sich gegenüber liegenden Spanneinheiten eingespannt. Das so eingespannte Werkstück wird mit dem Auftrennwerkzeug durch einen Trennschnitt in zwei Werkstück-Teile aufgetrennt. Die Auftrennung des Werkstückes in die beiden Werkstück-Teile hat zur Folge, dass die Werkstück-Teile bereits in jeweils mindestens einer Spanneinheit eingespannt sind, so dass diese Werkstück-Teile entweder einer weiteren Verarbeitung zugeführt oder an einer Ablagestelle abgelegt werden können.

Beim Trennvorgang ist es möglich, das Werkstück mittels der Spanneinheiten gegenüber dem Auftrennwerkzeug zu bewegen. Es ist weiter möglich, das durch die Spanneinheiten eingespannte Werkstück ortsfest zu halten und das Auftrennwerkzeug durch das Werkstück zu bewegen. Schließlich
ist auch eine Verfahrensweise möglich, bei der sich sowohl das eingespannte Werkstück als auch das Auftrennwerkzeug beim Trennvorgang
gegeneinander bewegen.

Als Auftrennwerkzeug kommen beispielsweise Kreissägen oder Finger- bzw. Schaftfräser in Betracht.

Bei einer vorteilhaften Ausbildung werden die Spanneinheiten und das Werkzeug relativ zueinander in x-Richtung bewegt. Dann ergibt sich ein gerader Trennschnitt in x-Richtung.

Die beiden Werkstück-Teile können mit den zugehörigen Spanneinheiten einer Weiterverarbeitung zugeführt werden. Bei den hierbei eingesetzten Werkzeugen kann es sich beispielhaft um Fräser, Bohrer und dgl. handeln. So kann beispielsweise nach dem Trennschnitt wenigstens eine Längsseite der Werkstück-Teile einer Längsbearbeitung unterzogen werden, wie einem Profilier- oder einem Hobelvorgang.

Die Werkstück-Teile werden vorteilhaft nach der Fertigbearbeitung wenigstens einer Ablage zugeführt. Dort können die Werkstück-Teile abgelegt werden, so dass die entsprechende Spanneinheit frei ist, um ein weiteres Werkstück zu spannen.

Soll ein Werkstück-Teil an beiden Längsseiten bearbeitet werden, dann wird zunächst mit der entsprechenden Spanneinheit das Werkstück so an einem entsprechenden Längsbearbeitungswerkzeug vorbeigefahren, dass die freie Längsseite, die durch den Sägeschnitt erzeugt worden ist, vom Längsbearbeitungswerkzeug erfasst wird. Um die andere Längsseite dieses Werkstück-Teiles einer Längsbearbeitung unterziehen zu können, wird das Werkstück-Teil umgespannt. Hierzu werden die beiden Spanneinheiten in eine Übergabeposition verfahren, in der sie einander gegenüberliegen. Das Werkstück wird von der zuvor freien Spanneinheit an der bereits längsbearbeiteten Seite eingespannt. Anschließend kann die Einspannung des Werkstück-Teiles im Bereich der unbearbeiteten Seite gelöst und diese Spanneinheit weggefahren werden. Nunmehr liegt diese unbearbeitete Längsseite frei, so dass diese beim Vorbeifahren an einem entsprechenden Längsbearbeitungswerkzeug bearbeitet werden kann.

Vorteilhaft ist es insbesondere, wenn die Werkstück-Teile während des Umspannens stets eingespannt bleiben. Dadurch ist gewährleistet, dass sich diese beim Umspannvorgang nicht bewegen und ihre Position nicht ändern. Die für eine einwandfreie Werkstückbearbeitung jederzeit erforderliche Kenntnis der genauen Position des Werkstückes wird durch den Umspannvorgang nicht beeinflusst.

Vorteilhaft ist es, wenn das Werkstück in eine Glasleiste und in eine Fensterkantel aufgeteilt wird. Diese beiden Teile können dadurch sehr einfach und kostengünstig gefertigt werden.

Es ist auch möglich, das Werkstück in zwei Sprossen aufzuteilen, die dann je nach Einsatzfall mit unterschiedlichen Werkzeugen bearbeitet werden können.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert**.** Es zeigen
- Fig. 1: eine erfindungsgemäße Bearbeitungsmaschine in perspektivischer Darstellung,
- Fig. 2: in perspektivischer und vergrößerter Darstellung das Auftrennen eines Werkstückes, das in einander gegenüberliegenden Spanneinheiten gespannt ist,
- Fig. 3: in Stirnansicht die beiden Spanneinheiten beim Auftrennvorgang,
- Fig. 4: in perspektivischer Darstellung die Bearbeitungseinheit mit ihren Spanneinheiten nach dem Auftrennen des Werkstückes,
- Fig. 5: in vergrößerter und perspektivischer Darstellung die eine Spanneinheit der erfindungsgemäßen Bearbeitungsmaschine,
- Fig. 6: in Stirnansicht ein Werkstück, aus dem eine Glasleiste ausgetrennt werden soll,
- Fig. 7: in Stirnansicht das Werkstück gemäß Fig. 6, das an einer Längsseite bearbeitet ist,
- Fig. 8: in Stirnansicht das Werkstück mit herausgetrennter Glasleiste,
- Fig. 9: in Stirnansicht ein Werkstück in Form einer Doppelsprosse,
- Fig. 10: das Werkstück gemäß Fig. 9, das an einer Längsseite bearbeitet ist,
- Fig. 11: in Stirnansicht das in seiner Längsrichtung aufgetrennte Werkstück gemäß Fig. 10,
- Fig. 12: in Stirnansicht das in Fig. 11 rechte Werkstückteil nach seiner Fertigbearbeitung,
- Fig. 13: das in Fig. 11 linke Werkstückteil nach seiner ersten Längsbearbeitung.

Mit der Bearbeitungsmaschine werden Werkstücke 1 aus Holz, holzähnlichen Werkstoffen, Kunststoff und dgl. bearbeitet. Die Werkstücke 1 haben viereckigen, vorzugsweise rechteckigen Querschnitt.

Die Bearbeitungsmaschine hat eine Laufbahn 2, die sich in x-Richtung erstreckt und längs der zwei Spanneinheiten 3 und 4 in x-Richtung verfahrbar sind. Die beiden Spanneinheiten 3, 4 sind an einander gegenüberliegenden Längsseiten der Laufbahn 2 verfahrbar.

Die Laufbahn 2 wird von einem Bearbeitungsportal 5 überspannt, das zwei Stützen 6, 7 aufweist, die mit Abstand neben der Laufbahn 2 auf dem Untergrund aufstehen und durch einen Querträger 8 miteinander verbunden sind. Er erstreckt sich mit Abstand oberhalb der Laufbahn 2 und weist eine Führung 9 auf, die sich in y-Richtung erstreckt. Die Führung 9 ist eine Linearführung, längs der in y-Richtung ein Werkzeugträger 10 verfahrbar ist. Er weist eine in z-Richtung verlaufende Führung 11 für einen Schlitten 12 auf, der eine Werkzeugspindel 13 trägt, mit der ein Werkzeug 14 drehbar angetrieben wird. Es ist um eine in z-Richtung liegende Achse drehbar. Mit dem Schlitten 12 kann das Werkzeug 14 in z-Richtung relativ zum zu bearbeitenden Werkstück 1 verstellt werden. Mit Hilfe des Werkszugträgers 10 kann das Werkzeug 14 zudem in y-Richtung verstellt werden.

Das Werkzeug 14 kann jeder Art sein, mit dem die Werkstücke 1 bearbeitet werden können. Es kann beispielsweise ein Fräser sein, der von einer Absaughaube umgeben sein kann. Das Werkzeug kann beispielsweise auch ein Bohr- oder Sägeaggregat und anderes sein.

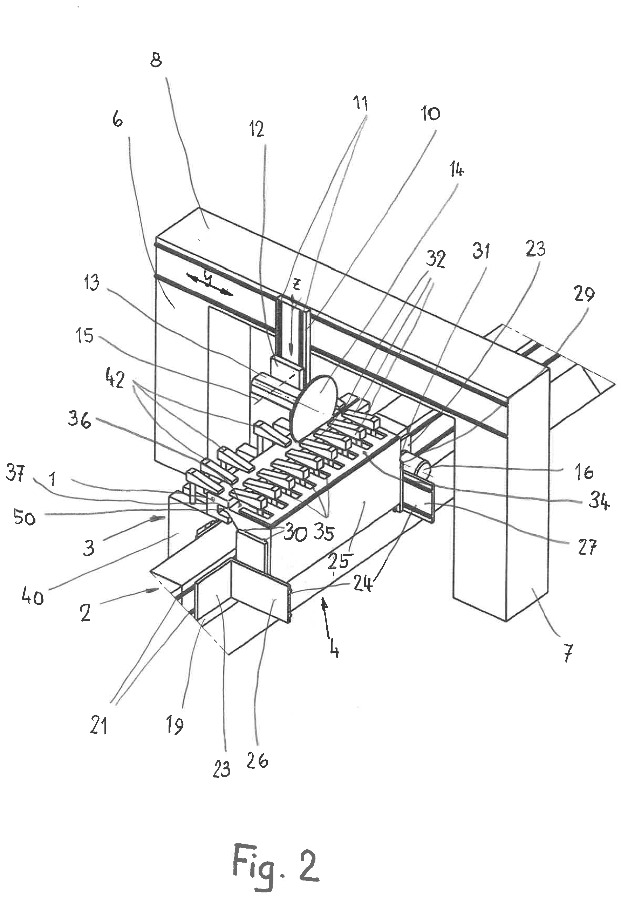

Fig. 2 zeigt als Werkzeug 14 ein Kreissägeblatt, das mit der Werkzeugspindel 13 drehbar angetrieben wird. Aus Fig. 2 ergibt sich, dass die Werkzeugspindel 13 gegenüber dem in z-Richtung verfahrbaren Schlitten 12 um eine in x-Richtung liegende Achse 15 geschwenkt werden kann.

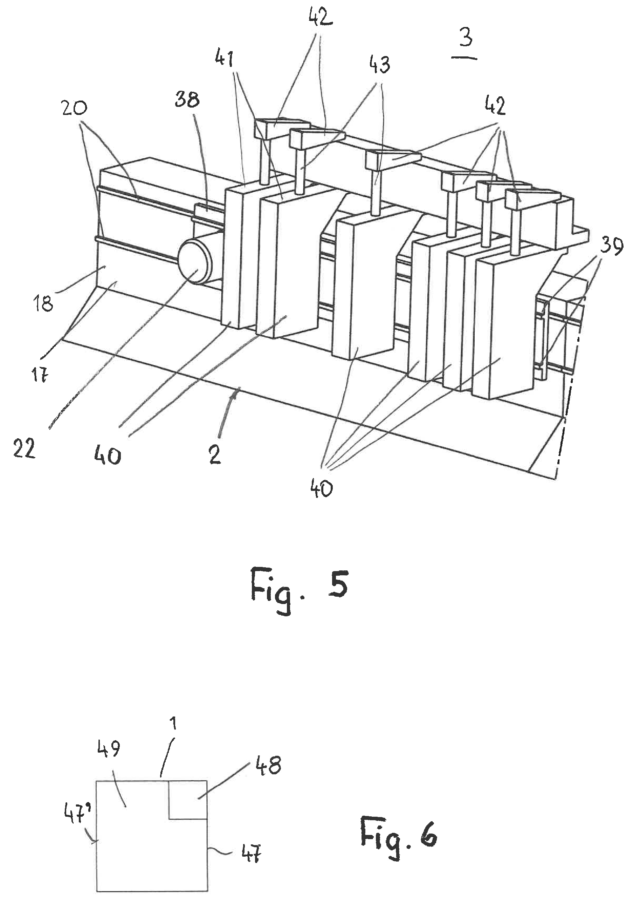

Die längs der Laufbahn 2 in x-Richtung verfahrbaren Spanneinheiten 3, 4 sind unabhängig voneinander verfahrbar. Jeder Spanneinheit 3, 4 ist ein entsprechender Antrieb 16, 22 (Fig. 2 und 5) zugeordnet.

Die Laufbahn 2 hat einen in x-Richtung sich erstreckenden Träger 17, der zwei parallel zueinander liegende Außenseiten 18, 19 aufweist, die sich ebenfalls in x-Richtung erstrecken und jeweils eine Führung 20, 21 für die Spanneinheiten 3, 4 aufweisen. Die Führungen 20, 21 werden beispielhaft durch zwei mit Abstand zueinander liegende Schienen gebildet, längs derer die Spanneinheiten 3, 4 verfahren werden können.

Die Spanneinheit 4 hat einen Klemmbackenträger 25 und eine Verstelleinheit 24, die in x-Richtung verfahrbar ist und über die sich der Klemmbackenträger 25 und damit die Spanneinheit 4 in y- und z-Richtung verstellen lässt. Die Verstelleinheit 24 hat zwei beidseitig des Klemmbackenträgers 25 angeordnete Schlitten 23, die längs der Führung 21 in x-Richtung verfahrbar sind. Jeder Schlitten 23 hat eine senkrecht davon abstehende Führung 26, 27, die sich in y-Richtung erstreckt und längs derer der Klemmbackenträger 25 in y-Richtung verstellbar ist. Die Führungen 26, 27 werden beispielhaft durch jeweils zwei parallel zueinander liegende Schienen gebildet, längs derer Schlitten 28, 29 verfahrbar sind. Die Schlitten 28, 29 haben wiederum jeweils eine Führung 30, 31, bestehend aus jeweils zwei parallel zueinander liegenden Schienen, die sich in vertikaler z-Richtung erstrecken. Die Schlit-ten 28, 29 bilden einen Kreuzsupport für den Klemmbackenträger 25. Mit Hilfe der Schlitten 28, 29 kann der Klemmbackenträger 25 quer zur Führung 20, 21 der Laufbahn 2 in y-Richtung und in z-Richtung verstellt werden.

Anstelle der beiden Schlitten 23 kann auch nur ein Schlitten 23 vorgesehen sein.

Der Klemmbackenträger 25 ist mit Klemmbacken 32 versehen, die in x-Richtung hintereinander angeordnet sind und mit denen das Werkstück 1 bei dessen Bearbeitung festgeklemmt werden kann.

Die Klemmbacken 32 sind am oberen Ende von Stellstangen 33 befestigt. Sie ragen durch einen Abschubrechen 34, der Durchtrittsöffnungen 35 für die Stellstangen 33 aufweist, in y-Richtung verstellbar ist und mit dem die Werkstücke 1 vom Klemmbackenträger 25 in y-Richtung abgeschoben werden können.

Die Klemmbacken 32 erstrecken sich vom oberen Ende der Stellstangen 33 aus in y-Richtung in Richtung auf die gegenüberliegende Außenseite 18 der Laufbahn 2. Die Klemmbacken 32 klemmen das Werkstück 1 von oben, das auf einer Auflage 36, die durch die Oberseite eines Stützteiles 56 des Klemmbackenträgers 25 gebildet ist, aufliegt. Der Stützteil 56 bildet den oberen Teil des Klemmbackenträgers 25.

Die Klemmbacken 32 werden mit Hilfe der Stellstangen 33 in z-Richtung verstellt. Hierbei können die Klemmbacken 32 gemeinsam in der Höhe verstellt werden. Grundsätzlich ist es möglich, die Klemmbacken 32 unabhängig voneinander in der Höhe (z-Richtung) zu verstellen.

Je nach Breite des Werkstückes 1 ist es notwendig, den Klemmbackenträger 25 in y-Richtung einzustellen. Er kann über die Schlitten 28, 29 längs der in y-Richtung verlaufenden Führungen 26, 27 im gewünschten Maße verstellt werden.

Während die Spanneinheit 4 längs der Führung 21 der Laufbahn 2 verfahrbar ist, wird die Spanneinheit 3 längs der Führung 20 an der gegenüberliegenden Außenseite 18 der Laufbahn 2 verfahren. Beide Spanneinheiten 3, 4 sind unabhängig voneinander verfahrbar, so dass sie zur Bearbeitung des Werkstückes 1 jeweils in die erforderliche Position verfahrenen werden können.

Die Spanneinheit 3 hat einen Schieber 38 (Fig. 5), der längs der Führung 20 der Laufbahn 2 in x-Richtung verfahrbar ist. Zum Verfahren des Schiebers 38 ist der Antrieb 22 vorgesehen.

Der Schieber 38 ist auf seiner von der Laufbahn 2 abgewandten Außenseite mit einer Führung 39 versehen, die beispielhaft durch zwei parallel zueinander liegende und in x-Richtung sich erstreckende Schienen gebildet wird. Längs dieser Führung 39 sind Einzeltische 40 verfahrbar, die sich je nach einzuspannendem Werkstück 1 längs des Schiebers 38 in unterschiedliche Positionen relativ zueinander verschieben lassen. Die zum Verschieben der Einzeltische 40 erforderlichen Antriebe sind der Übersichtlichkeit wegen nicht dargestellt.

Jeder Einzeltisch 40 hat eine Auflage 41 für die Werkstücke sowie eine obere Klemmbacke 42. Jede Klemmbacke 42 sitzt am oberen Ende einer Stellstange 43, die über die Auflage 41 der Einzeltische 40 ragt.

Die Klemmbacken 42 erstrecken sich von den Stellstangen 43 aus in y-Richtung sowie in Richtung auf die gegenüberliegenden Außenseite 19 der Laufbahn 2 (Fig. 2).

Die Werkstücke 1 werden nach ihrer noch zu beschreibenden Bearbeitung und in einer noch zu beschreibenden Weise auf eine Abschiebeeinheit 44 übergeben, die in der Höhe in z-Richtung verstellt werden kann.

Mit wenigstens einem Abschieber 45 werden die auf der Abschiebeeinheit 44 liegenden Werkstücke auf wenigstens einen Abförderer 46 geschoben. Dazu wird die Abschiebeeinheit 44 in z-Richtung auf Höhe des Abförderers verfahren. Er ist vorteilhaft ein Auslaufband, das in x-Richtung vorteilhaft länger ist als das längste zu übergebende Werkstück. Vom Abförderer 46 können die Werkstücke 1 von Hand oder mit einer Mechanisierungseinrichtung entnommen werden.

Mit der Bearbeitungsmaschine lassen sich unterschiedliche Bearbeitungen der Werkstücke 1 vornehmen. So können die Werkstücke so bearbeitet werden, dass aus ihnen eine Fensterkantel, z.B. ein Flügelteil, und eine Glasleiste gefertigt werden.

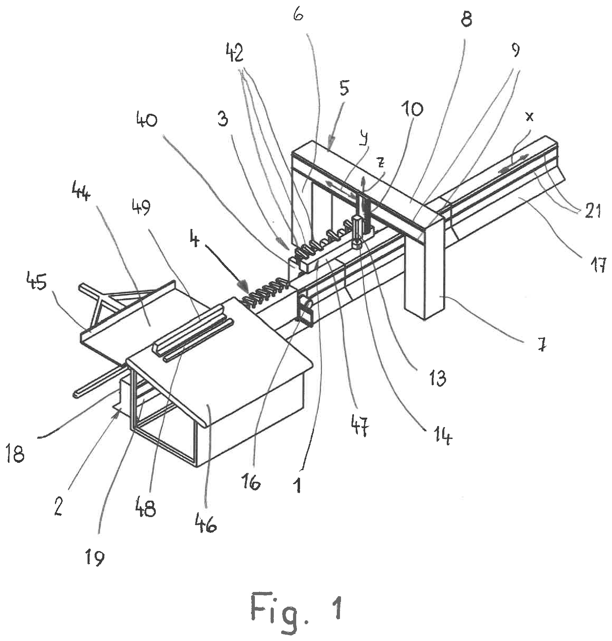

Als Ausgangsprodukt dient ein im Querschnitt rechteckiges oder quadratisches Werkstück 1 (Kantel), wie es in den Fig. 1 und 6 dargestellt ist. Dieses Werkstück 1 wird zunächst in der Spanneinheit 3 eingespannt. Die Zuführung zur Spanneinheit 3 erfolgt in bekannter Weise und wird daher nicht näher beschrieben und dargestellt. Das Werkstück 1 liegt auf den Auflagen 41 der Einzeltische 40 auf und wird durch die oberen Klemmbacken 42 nach unten auf die Auflagen 41 gedrückt. Die Einzeltische 40 sind so längs des Schiebers 38 eingestellt, dass das Werkstück 1 optimal eingespannt ist. Insbesondere so, dass die beiden Enden des Werkstücks 1 auf beiden Seiten über die Spanneinheit 3 überstehen und für ein e Endenbearbeitung, d.h. stirnseitige Bearbeitung, zugänglich sind. Als Endenbearbeitung wird beispielsweise der stirnseitige Bereich des späteren Fensterkantels mit Zapfen und Schlitzen und der Bereich der späteren Glasleiste mit einer 45°-Gehrungsfräsung versehen.

Die Einspannung des Werkstückes 1 erfolgt auch derart, dass die zu bearbeitende Längsseite 47 des Werkstückes 1 frei ist. Die Klemmbacken 42
haben somit Abstand von der Werkstücklängsseite 47. Das zur Längsbearbeitung des Werkstückes 1 herangezogene Werkzeug 14 wird mit Hilfe des Werkzeugträgers 10 und des Schlittens 12 so am Bearbeitungsportal 5 positioniert, dass die Werkstücklängsseite 47 beim Vorbeifahren der Spanneinheit 3 mit dem Werkzeug 14 bearbeitet wird. Wie aus Fig. 1 hervorgeht, liegt die Drehachse des Werkzeuges 14 in z-Richtung.

Während die Spanneinheit 3 auf der Laufbahn 2 am Werkzeug 14 vorbeigefahren wird, befindet sich die Spanneinheit 4 auf der anderen Seite der Laufbahn 2 in einer Warteposition. Die Spanneinheit 4 hat beispielsweise zuvor ein fertig bearbeitetes Werkstück in noch zu beschreibender Weise der Abschiebeeinheit 44 übergeben.

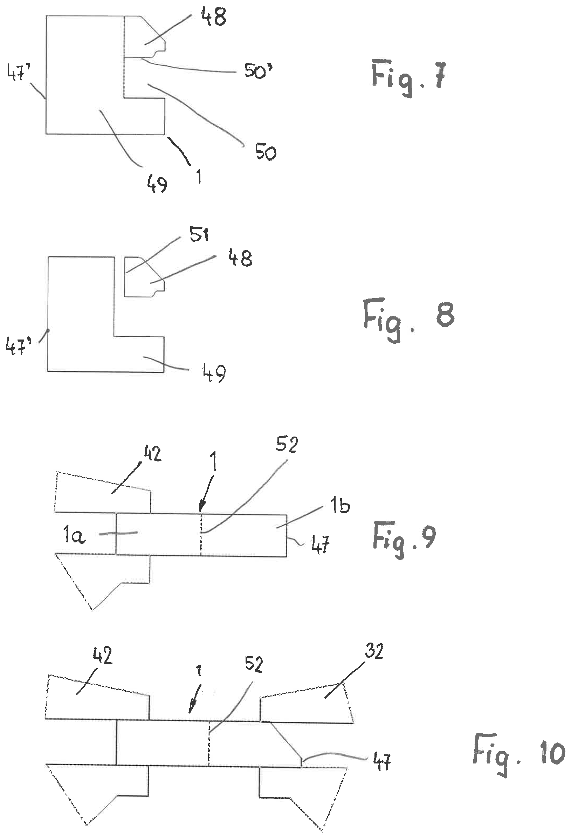

Aus dem Werkstück 1 wird eine Glasleiste 48 (Fig. 1 und 6) herausgetrennt. Der verbleibende Teil des Werkstückes 1 bildet dann eine Fensterkantel 49, beispielsweise ein Flügelteil. Durch die beschriebene Längsbearbeitung erhält das Werkstück 1 die erforderliche Profilform. Fig. 8 zeigt beispielhaft und schematisch das Fensterkantel 49, das L-förmigen Querschnitt hat. Die Glasleiste 48 hat den für den jeweiligen Fensterflügel geeigneten Querschnitt. Die in Fig. 8 dargestellte Querschnittsform der Glasleiste 48 ist nur beispielhaft zu verstehen. Die Glasleiste 48 und das Fensterkantel 49 sind noch einstückig miteinander ausgebildet (Fig. 7).

Die beiden Spanneinheiten 3, 4 werden nach der Längsbearbeitung so verfahren, dass sie einander an der Laufbahn 2 gegenüberliegen. Die Klemmbacken 32 der Spanneinheit 4 sind dabei hochgefahren und die Auflage 36 entsprechend positioniert, so dass das Werkstück 1 unter die Klemmbacken 32 gelangen kann. Sobald die beiden Spanneinheiten 3, 4 einander gegenüberliegen, werden die Klemmbacken 32 der Spanneinheit 4 abgesenkt, um das Werkstück 1 auch mit dieser Spanneinheit 4 zu spannen.

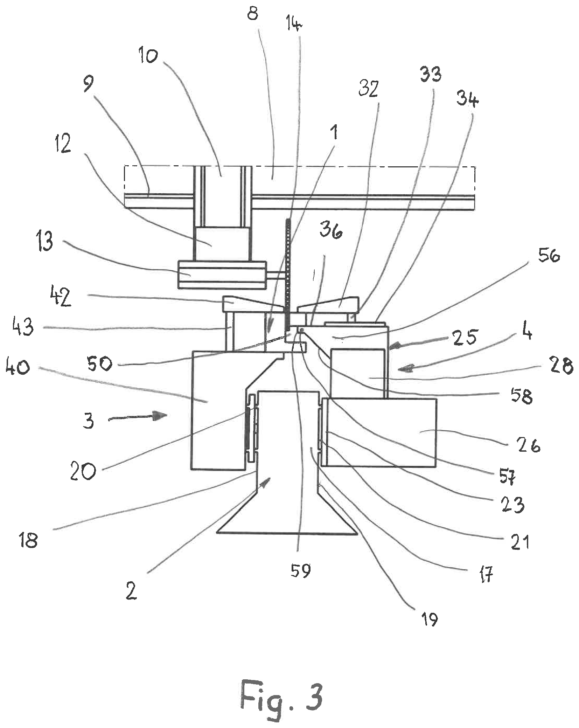

Diese Situation ist in Fig. 3 dargestellt. Die beiden Spanneinheiten 3, 4 haben in y-Richtung einen solchen Abstand voneinander, dass sie aneinander vorbei- bzw. gegenüberfahren können.

Um die Glasleiste 48 von der Fensterkantel 49 zu trennen, wird das an der Längsseite 47 bearbeitete Werkstück 1 mit beiden Spanneinheiten 3, 4 am Werkzeug 14 in Form eines Kreissägeblattes (Fig. 2) vorbeigeführt. Für den Sägevorgang ist die Werkzeugspindel 13 um die Schwenkachse 15 (x-Achse) so geschwenkt, dass das Werkzeug 14 den Sägeschnitt in x-Richtung ausführen kann. Mit dem Werkzeugträger 10 und dem Schlitten 12 lässt sich das Werkzeug 14 einfach in die erforderliche Arbeitsposition verstellen.

Das Werkstück 1 bzw. die Werkstückteile 48 und 49 sind in den Fig. 1 bis 8 nur schematisch dargestellt. Durch die Längsbearbeitung ist an der Längsseite 47 eine Nut 50 vorgesehen.

Der Stützteil 56 hat einen Vorsprung 57, der in y-Richtung vom Stützteil 56 absteht und in Richtung auf die gegenüberliegende Spanneinheit 3 verläuft, in x-Richtung gesehen (Fig. 3). Der Vorsprung 57 ist so gestaltet, dass er mit seiner der Spanneinheit 3 zugewandten Seite in die Nut 50 eingreifen und das Werkstück mit seiner oberen Nutwand 50' auf ihr aufliegen kann (Fig. 3 und 7). Das Werkstück 1 wird mit der Spanneinheit 4 zwischen der Auflage 36 des Klemmbackenträgers 25 und den Klemmbacken 32 geklemmt. Die Oberseite des Stützteiles 56 setzt sich in die Oberseite des Vorsprunges 57 fort und bildet im Bereich des Vorsprunges 57 die Auflage 36.

Der Klemmbackenträger 25 hat eine Vorderseite 58, die so verläuft, dass sie nicht mit dem Werkstück 1 in Berührung kommt, wenn der Vorsprung 57 in die Nut 50 des Werkstückes 1 eingreift. Damit der Vorsprung 57 in die Nut 50 eingreifen und das Werkstück 1 wie beschrieben eingespannt werden kann, wird der Klemmbackenträger 25 in y-Richtung entsprechend positioniert. Dies kann bereits erfolgen, bevor die beiden Spanneinheiten 3, 4 in x-Richtung einander gegenüberfahren oder nachdem sich die beiden Spanneinheit in dieser gegenüberliegenden Lage befinden.

Die Vorderseite 58 liegt, in x-Richtung gesehen (Fig. 3), schräg. Sie schließt mit einer Unterseite 59 des Vorsprunges 57 einen stumpfen Winkel ein. Die Unterseite 59 des Vorsprunges 57 liegt vorteilhaft parallel zur Auflage 36. Um in die Nut 50 einfahren zu können muss die Höhe des Vorsprungs 57 kleiner als die Nutbreite in z-Richtung sein.

Die schräg liegende Vorderseite 58 ist so ausgebildet, dass sie nicht mit dem Werkstück 1 kollidiert, wenn der Vorsprung 57 in die Nut 50 eingreift.

Die Einspannung des Werkstückes 1 erfolgt derart, dass die Klemmbacken 32, 42 einen solchen Abstand in y-Richtung voneinander haben, dass das Werkzeug 14 ungehindert zwischen die Klemmbacken 32, 42 gelangen kann, wenn das Werkstück 1 mit den beiden Spanneinheiten 3, 4 am Werkzeug 14 vorbeigefahren wird. Auch der Klemmbackenträger 25 bzw. der Vorsprung 57 des Stützteiles 56 ist an seiner der Spanneinheit 3 zugewandten Seite so gestaltet, dass er bei seinem Eingriff in die Nut 50 einerseits das Werkstück 1 an dieser Seite sicher abstützen kann, aber einen solchen Abstand vom Werkzeug 14 hat, in x-Richtung gesehen, dass das Werkzeug 14 nicht in Kollision mit dem Klemmbackenträger 25 gelangt. Die Abstützung und Einspannung des Werkstücks 1 erfolgt auf dieser Seite im Bereich der abzutrennenden Glasleiste 48 und ist so ausgeführt, dass die Glasleiste 48 nach dem Abtrennen sicher und zuverlässig in der Spanneinheit 4 eingespannt ist.

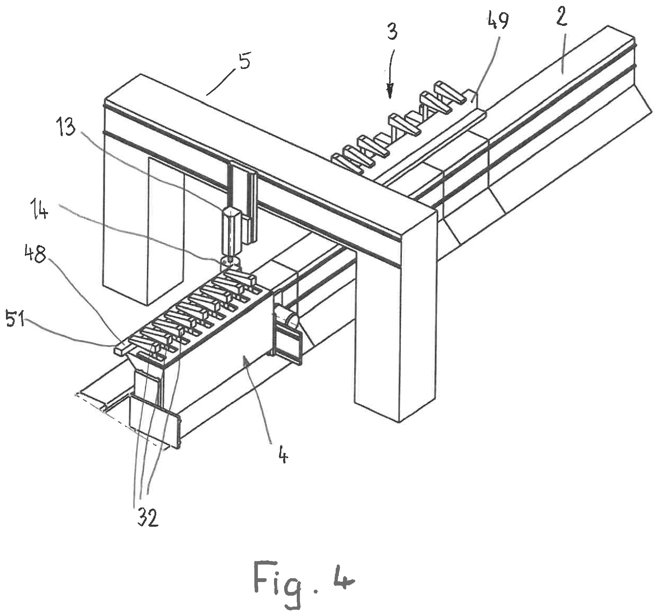

Das Werkstück 1 wird von der Säge in die Fensterkantel 49 und die Glasleiste 48 aufgetrennt. Nach dem Auftrennvorgang ergibt sich die Situation (Fig. 4), dass das Fensterkantel 49 in der Spanneinheit 3 und die Glasleiste 48 in der Spanneinheit 4 eingespannt sind.

Nach dem Trennvorgang wird die Spanneinheit 3 mit dem eingespannten Fensterkantel 49 auf der Laufbahn 2 in eine Warteposition verfahren, die in Fig. 4 dargestellt ist.

Die Klemmbacken 32 der Spanneinheit 4 spannen die Glasleiste 48 derart, dass die freie Längsseite 51 zur Bearbeitung durch das Werkzeug 14 freiliegt. Wenn die Längsseite 51 bearbeitet werden soll, dann wird die Spanneinheit 4 mit der eingespannten Glasleiste 48 in x-Richtung am Werkzeug 14 vorbeigeführt. Das Werkzeug 14 ist ein entsprechendes Längsbearbeitungswerkzeug, das durch Verstellung in y- und z-Richtung entsprechend positioniert worden ist und mit der Werkzeugspindel 13 drehbar angetrieben wird.

Sobald die Längsbearbeitung der Glasleiste 48 abgeschlossen ist, wird die Spanneinheit 4 mit der eingespannten Glasleiste 48 zur Abschiebeeinheit 44 gefahren. Diese ist in z-Richtung auf ein Niveau bezüglich der Auflage 36 gestellt, so dass die fertig bearbeitete Glasleiste 48 an die Abschiebeinheit 44 übergeben werden kann, indem die Klemmung der Glasleiste 48 in der Spanneinheit 4 gelöst und die Glasleiste 48 mit dem Abschubrechen 34 auf die Abschiebeeinheit 44 geschoben wird. Mit dem Abschieber 45 wird die Glasleiste 48, nachdem die Abschiebeinheit 44 auf das Niveau des Abförderers 46 angehoben worden ist, auf den Abförderer 46 geschoben.

Das in der Spanneinheit 3 eingespannte Werkstückteil/Fensterkantel 49 wird bei Bedarf und je nach gewünschtem Profil an dessen ersten Längsseite noch fertig profiliert.

Zur Bearbeitung der anderen Längsseite 46' muss das Fensterkantel 49 an die Spanneinheit 4 übergeben werden. Dies erfolgt in bekannter Weise, indem die freie Spanneinheit 4 und/oder die Spanneinheit 3 mit der eingespannten Fensterkantel 49 in eine Übergabestellung verfahren, in der sie sich gegenüberliegen. Die Klemmbacken 32 der Spanneinheit 4 sind hochgefahren und der Klemmbackenträger 25 so positioniert bzw. geringfügig abgesenkt, dass die Fensterkantel 49 mit ihrer freien Längsseite berührungslos unter die Klemmbacken 32 gelangen kann. Dann wird die Fensterkantel 49 in der Spanneinheit 4 eingespannt. Die Einspannung in der Spanneinheit 3 wird gelöst, die anschließend längs der Laufbahn 2 wegfahren kann. Die Einspannung in der Spanneinheit 4 ist so, dass nunmehr die andere Längsseite 47´ der Fensterkantel 49 bearbeitet werden kann, wenn diese an einem entsprechenden Bearbeitungswerkzeug 14 vorbeigefahren wird.

Anschließend wird die an beiden Längsseiten 47, 47´ bearbeitete Fensterkantel 49 mit der Spanneinheit 4 zur Abschiebeeinheit 44 gefahren und nach Freigabe der Fensterkantel 49 mit dem Abschubrechen 34 auf die Abschiebeeinheit 44 geschoben. Mit dem Abschieber 45 wird die Fensterkantel 49 auf den Abförderer 46 geschoben.

Auf dem Abförderer 46 liegen aufgrund der beschriebenen Verfahrensweise die aus dem demselben Werkstück 1 hergestellten Glasleiste 48 und Fensterkantel 49 nebeneinander. Dadurch ist in einfacher Weise sichergestellt, dass bei der Herstellung beispielsweise ei-nes Fensterflügels die Fensterkantel 49 und die zugehörige Glasleiste 48 verarbeitet werden.

Anschließend kann das nächste Werkstück 1 in der beschriebenen Weise bearbeitet und in die Glasleiste 48 und die Fensterkantel 49 aufgetrennt werden.

Die Fig. 6 bis 8 zeigen das Werkstück 1 in Stirnansicht in den verschiedenen Bearbeitungsphasen.

Fig. 6 zeigt das Werkstück 1 vor der Bearbeitung. Es hat den viereckigen Querschnitt, im Ausführungsbeispiel beispielsweise nahezu quadratischen Querschnitt. Die Teile, welche die Glasleiste 48 und die Fensterkantel 49 bilden sollen, sind durch entsprechende Linien gekennzeichnet.

Fig. 7 zeigt schematisch die Querschnittsgestaltung des Werkstückes 1 nach dessen Längsbearbeitung, das mit der Spanneinheit 3 am Längsbearbeitungswerkzeug 14 vorbeigefahren wurde. (Fig. 1). Bei dieser Bearbeitung wird die Längsnut 50 in der Längsseite 47 des Werkstückes 1 erzeugt. Gleichzeitig wird auch der Bereich des Werkstückes 1, aus dem die Glasleiste 48 herausgetrennt wird, d.h. die eine Längsseite der späteren Glasleiste 48, sowie die rechte Längsseite des späteren Fensterkantels 49 im Bereich der und unterhalb der Nut 50 entsprechend profiliert.

Fig. 8 zeigt die Situation, wenn das Werkstück 1 in der beschriebenen Weise mit den beiden Spanneinheiten 3, 4 an dem als Kreissäge ausgebildeten Werkzeug 14 vorbeigeführt und in die Glasleiste 48 und in die Fensterkantel 49 aufgetrennt wurde.

Eine weitere Bearbeitungsmöglichkeit von Werkstücken 1 mit der Bearbeitungsmaschine wird anhand der Fig. 9 bis 13 erläutert. Bei diesem Verfahren wird ein Werkstück 1 in zwei Sprossen 1a und 1b aufgeteilt. Das Werkstück 1 hat rechteckigen Querschnitt, wobei die Breite wesentlich größer ist als die Dicke des Werkstückes. Mit der gestrichelten Linie 52 wird der spätere Sägeschnitt gekennzeichnet.

Das Werkstück 1 wird in bekannter, nicht dargestellter Weise der Spanneinheit 3 zugeführt und in die Spanneinheit 3 eingespannt, deren Einzeltische 40 so eingestellt werden, dass das Werkstück 1 einwandfrei gespannt ist. Die Einspannung des Werkstückes 1 erfolgt in der Weise, dass die zu bearbeitende Längsseite 47 freiliegt. In den Fig. 9 bis 13 sind schematisch jeweils die Klemmbacken 32, 42 und zugehörigen Auflagen 36, 41 dargestellt, um die Position des Werkstückes 1 in der eingespannten Lage zu kennzeichnen.

Je nach Länge des Werkstückes 1 werden die Einzeltische mit ihren Klemmbacken 42 so längs des Schiebers 38 verstellt, dass das Werkstück 1 mit seinen beiden Enden über die jeweils äußeren Einzeltische 40 in x-Richtung vorsteht. Dadurch besteht die Möglichkeit, das Werkstück 1 an seinen beiden Stirnseiten mit einem entsprechenden Werkzeug 14 zu bearbeiten. Diese Endenbearbeitung wird derart vorgenommen, dass die Spanneinheit 3 zum Bearbeitungsportal 5 längs der Laufbahn 2 verfahren und positioniert wird. Die Werkzeugspindel 13 trägt ein entsprechendes Endenbearbeitungswerkzeug 14, das in y-Richtung längs der jeweiligen Stirnseite des Werk-stückes 1 verfahren wird. Auf diese Weise werden beide Sprossen 1a, 1b gemeinsam der Endenbearbeitung unterworfen.

Nach der Endenbearbeitung kann die Längsseite 47 bearbeitet werden, indem das Werkstück 1 mit der Spanneinheit 3 am Werkzeug 14 vorbeigefahren wird, das nunmehr ein Längsbearbeitungswerkzeug ist.

Falls eine Endenbearbeitung nicht notwendig ist, kann gleich die Längsbearbeitung der Längsseite 47 erfolgen.

Nach dieser Längsbearbeitung hat das Werkstück 1 beispielhaft eine Querschnittsform, wie sie in Fig. 10 dargestellt ist.

Anschließend werden die beiden Spanneinheiten 3, 4 längs der Laufbahn 2 in eine Position gebracht, in welcher sie sich einander gegenüberliegen, wie dies in Fig. 2 dargestellt ist. Vor dieser Verstellung sind die Klemmbacken 32 der freien Spanneinheit 4 hochgefahren und vorteilhaft deren Klemmbackenträger 25 in z-Richtung geringfügig abgesenkt worden. Damit ist sichergestellt, dass das Werkstück 1 beim Verstellen der Spanneinheiten 3,4 in diese gegenüberliegende Position nicht mit den Klemmbacken 32 und der Auflage 36 des Klemmbackenträgers 25 in Berührung kommt, und an der bereits bearbeiteten Längsseite beschädigt werden könnte. Sobald sich die Spanneinheiten 3, 4 gegenüberliegen, werden durch entsprechende Verstellungen in z-Richtung die Auflage 36 angehoben und die Klemmbacken 32 abgesenkt. Mit ihnen wird das Werkstück 1 an der bearbeiteten Längsseite 47 festgeklemmt. Da das Werkstück 1 auch in der Spanneinheit 3 eingespannt bleibt, ist es nunmehr in beiden Spanneinheiten 3, 4 gespannt.

Diese werden gemeinsam dem als Kreissäge ausgebildeten Werkzeug 14 zugeführt, das zuvor mit dem Werkzeugträger 10 und dem Schlitten 12 in die Bearbeitungsposition gebracht worden ist. Beim Durchlauf des in den beiden Spanneinheiten 3, 4 eingespannten Werkstücks 1 erfolgt längs der Trennlinie 52 (x-Richtung) der Sägeschnitt mittels des als Kreissäge ausgebildeten Werkzeuges 14.

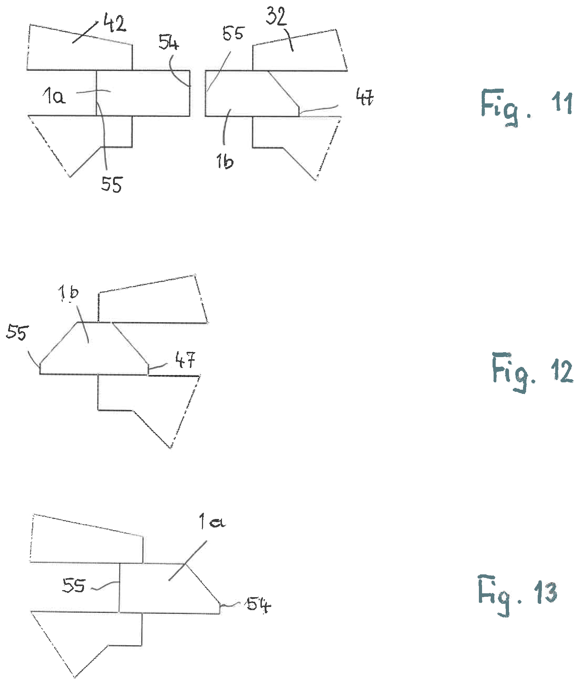

Die Klemmbacken 32, 42 haben ausreichenden Abstand von der Trennlinie 52, so dass ein sicherer Sägeschnitt durchgeführt werden kann, um das Werkstück 1 in die beiden Sprossen 1a und 1b aufzuteilen (Fig. 11).

Nach dem Sägeschnitt befindet sich die Sprosse 1a in der Spanneinheit 3 und die Sprosse 1b in der Spanneinheit 4.

Nach dem Wechsel des Werkzeuges 14 auf ein Längsbearbeitungswerkzeug, das um eine z-Achse drehbar angetrieben wird, wird die Spanneinheit 4 mit der eingespannten Sprosse 1b am Werkzeug 14 vorbeigefahren, das die zweite Längsseite 55 bearbeitet.

Fig. 12 zeigt die fertig bearbeitete Sprosse 1b, die an beiden Längsseiten 47, 55 mit einem entsprechenden Längsprofil versehen ist.

Die Spanneinheit 4 wird dann zur Abschiebeeinheit 44 gefahren, um die Sprosse 1b der Abschiebeeinheit 44 zu übergeben. Von dieser gelangt sie schließlich wie zuvor beschrieben auf den Abförderer 46.

Die Sprosse 1a kann an beiden Längsseiten 54, 55 noch längsbearbeitet werden. Nach dem Sägeschnitt liegt die Längsseite 54 der in der Spanneinheit 3 eingespannten Sprosse 1a frei. Diese wird mit der Spanneinheit 3 am Werkzeug 14 vorbeigefahren, das die Längsseite 54 bearbeitet (Fig. 13). Während des Bearbeitungsvorganges steht das Werkzeug 14 ortsfest und dreht lediglich um seine Achse.

Um die gegenüberliegende Längsseite 55 der Sprosse 1a zu bearbeiten, wird sie der Spanneinheit 4, die nach der Abgabe der Sprosse 1b an die Abschiebeeinheit 44 frei ist, in der gleichen Weise wie für das Fensterkantel 49 beschrieben, übergeben.

Die unbearbeitete Längsseite 55 der Sprosse 1a liegt nunmehr frei, so dass die Sprosse 1a mit der Spanneinheit 4 am rotierenden Werkzeug 14 vorbeifahren kann, um mit ihm die Längsseite 55 im gewünschten Maße zu profilieren (analog Darstellung in Fig. 12).

Anschließend wird die Sprosse 1a mit der Spanneinheit 4 zur Abschiebeeinheit 44 gefahren und in der beschriebenen Weise dem Abförderer 46 zugeführt. Somit sind beide Sprossen 1a, 1b, die aus einem Werkstück 1 gefertigt wurden, nebeneinander auf dem Abförderer abgelegt und können diesem einander zugeordnet entnommen werden.

## Patentansprüche

1. Bearbeitungsmaschine für Werkstücke (1) aus Holz, holzähnlichen Werkstoffen, aus Kunststoff und dgl., mit einer Laufbahn (2), längs der auf einander gegenüberliegenden Seiten (18, 19) Spanneinheiten (3, 4) angeordnet sind, von denen mindestens eine in x-Richtung verfahrbar ist und die jeweils Klemmbacken (32, 42) zum Einspannen der Werkstücke (1) aufweisen, und mit wenigstens einem Werkzeug (14), **dadurch gekennzeichnet, dass** zumindest die eine Spanneinheit (4) einen Stützteil (56) mit einem Vorsprung (57) aufweist, der in y-Richtung auf die gegenüberliegende Spanneinheit (3) vorsteht, in Längsrichtung der Laufbahn (2) (x-Richtung) gesehen, und dass zumindest die Oberseite des Vorsprunges (57) die Auflage (36) für die Werkstücke (1) bildet.

2. Bearbeitungsmaschine nach Anspruch 1,
**dadurch gekennzeichnet, dass** der Stützteil (56) eine geneigte Vorderseite (58) aufweist.

3. Bearbeitungsmaschine nach Anspruch 2,
**dadurch gekennzeichnet, dass** die Vorderseite (58) stumpfwinklig an eine Unterseite (59) des Vorsprunges (57) anschließt.

4. Bearbeitungsmaschine nach Anspruch 3,
**dadurch gekennzeichnet, dass** die Unterseite (59) parallel zur Auflage (36) verläuft.

5. Verfahren zur Bearbeitung von Werkstücken (1) aus Holz, holzähnlichen Werkstoffen, Kunststoff und dgl., insbesondere auf einer Bear-beitungsmaschine nach einem der Ansprüche 1 bis 4, bei dem die Werkstücke (1) in Spanneinheiten (3, 4), eingespannt und mit einem Werk-zeug (14) bearbeitet werden,
**dadurch gekennzeichnet, dass** die Werkstücke (1) an beiden Längsseiten (47, 55) mit wenigstens zwei, in Längsrichtung der Werkstücke (1) gesehen, sich gegenüberliegenden Spanneinheiten (3, 4) eingespannt und mit einem Auftrennwerkzeug (14) in zwei Werkstückteile (48, 49; 1a, 1b) aufgetrennt werden, die nach dem Auftrennen (einzeln) in jeweils mindestens einer Spanneinheit (3, 4) eingespannt sind.

6. Verfahren nach Anspruch 5,
**dadurch gekennzeichnet, dass** beim Trennvorgang die Spanneinheiten (3, 4) und das Werkzeug (14) relativ zueinander in x-Richtung bewegt werden.

7. Verfahren nach Anspruch 5 oder 6,
**dadurch gekennzeichnet, dass** die Werkstück-Teile (48, 49; 1a, 1b) mit den zugehörigen Spanneinheiten (3, 4) einer Weiterbearbeitung zugeführt werden.

8. Verfahren nach einem der Ansprüche 5 bis 7,
**dadurch gekennzeichnet, dass** die Werkstück-Teile (48, 49; 1a, 1b) wenigstens einer Ablage (44, 46) zugeführt werden.

9. Verfahren nach einem der Ansprüche 5 bis 8,
**dadurch gekennzeichnet, dass** die Werkstück-Teile (48, 49; 1a, 1b) zur Bearbeitung beider Längsseiten (47, 47´) zwischen den beiden Spanneinheiten (3, 4) umgespannt werden.

10. Verfahren nach Anspruch 9,
**dadurch gekennzeichnet, dass** die Werkstück-Teile (48, 49; 1a, 1b) während des Umspannens stets eingespannt bleiben.

11. Verfahren nach einem der Ansprüche 5 bis 10,
**dadurch gekennzeichnet, dass** das Werkstück (1) in eine Glasleiste (48) und in eine Fensterkantel (49) als Werkstück-Teile aufgeteilt wird.

12. Verfahren nach einem der Ansprüche 5 bis 10,
**dadurch gekennzeichnet, dass** das Werkstück (1) in zwei Sprossen (1a, 1b) als Werkstück-Teile aufgeteilt wird.
